# EUROPEAN PATENT APPLICATION

(11) **EP 4 650 235 A1**
(43) Date of publication of application: **19.11.2025**
(21) Application number: 24176336.6
(22) Date of filing: 16.05.2024
(51) Int. Cl.: B60T 17/08, F16D 65/28

(54) **SPRING BRAKE ACTUATOR FOR A PNEUMATIC BRAKING SYSTEM OF A VEHICLE, IN PARTICULAR UTILITY VEHICLE, PNEUMATIC BRAKING SYSTEM, VEHICLE AND METHOD**

(71) Applicant: ZF CV Systems Europe BV, 1170 Brüssel (BE)
(72) Inventor: GAWLIK, Rafal, 51-315 Wroclaw (PL); ZELJAS, Tomasz, 50-527 Wroclaw (PL); KALWAT, Kamil, 55-080 Katy Wroclawskie (PL)
(74) Representative: Schäferjohann, Volker

(57) **Abstract**

Spring brake actuator (250) for a pneumatic braking system (210) of a vehicle (200a), in particular utility vehicle (200b), wherein the spring brake actuator (250) comprises: - a housing (50) having a circumferential portion (52) and a housing base (51) with an opening (53); a brake release bolt (111), wherein the brake release bolt (111) projects through the opening (53); and a boss element (113a) for cooperating with the brake release bolt (111); wherein the brake release bolt (111) and the boss element (113a) are bonded to each other by a substance-to-substance bond (120) at at least one bonding section (121).

## Description

The disclosure relates to a spring brake actuator for a pneumatic braking system of a vehicle, in particular utility vehicle. The disclosure also relates to a pneumatic braking system of a vehicle, in particular utility vehicle, wherein the pneumatic braking system comprises a spring brake actuator, to a vehicle, in particular utility vehicle, and to a method for manufacturing a spring brake actuator.

Brake release mechanisms for spring brake actuators are generally known in the prior art. It is the aim of such release mechanisms to release a spring brake actuator, for example in case of pneumatic systems malfunctions. In known brake release mechanisms, the actuator is released by rotating a brake release bolt. Such brake release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such.

For operating said brake release bolt, it is known to attach an interface nut to the operating section of the brake release bolt. The interface nut of the spring brake actuator is used to transfer a torque to the release mechanism. Any movement of the interface nut relative to the brake release bolt should be avoided, since such movement may have a negative influence on the effectiveness of releasing the spring brake actuator. In current solutions, the position of the interface nut relative to the brake release bolt is locked by a pin. The pin is mounted in such way to lock any movement of the interface nut on the threaded brake release bolt. These interface nuts and operating sections each comprise a bore section that form a common bore when the interface nut is attached to the operating section in the correct position. After having aligned the interface nut to the operating section, a locking element in the form of a locking pin is thereafter inserted in said bore. Therewith, the interface nut is blocked regarding this position relative to the operating section. The pin could be mounted in radial or axial direction, depending on the final solution.

These systems are well-proven. However, there is still room for improvement. In an attempt to reduce the overall dimensions of the spring brake actuator, also the interface nut dimensions have been reduced. This, in consequence, also requires the use of smaller locking pins. These locking pins are however subject to high forces when operating the brake release bolt. It has been found that when reducing the dimensions of interface nut and the locking pin, in extreme situations, the locking pin may be destroyed during operation.

EP 4 279 349 A1 discloses a brake release mechanism for a spring brake actuator, in particular a parking or emergency spring brake actuator for use in a commercial vehicle, said release mechanism comprising a brake release bolt having a threaded portion and an operating section for operating the brake release bolt when inserted into a spring brake actuator, a running nut engaging the threaded portion, said running nut being adapted to axially travel along the threaded portion in order to move a spring brake actuator piston against a force of an actuator power spring, an interface nut attached to said operating section of the brake release bolt, wherein the interface nut and the operating section each comprise at least one bore section that form a common bore when the interface nut is attached to said operating section, and a locking element that is inserted in said bore for blocking the interface nut relative to the operating section. In particular, the locking element is configured as a locking ball.

However, each of the solution with the pin and with the ball requires a drilling process on the interference line between the threaded brake release bolt and the interface nut and a proper alignment of the brake release bolt and the interface nut. The connection needs to have enough strength to transfer an expected torque which is needed to perform a full release of the spring brake actuator.

In the light of the prior art, it is an object of the disclosure to provide a contribution to the prior art. In particular, an object of the disclosure is to provide a brake release mechanism that is durable in particular with regard to the connection of the interface nut to the operating section and that is efficiently and cost-effectively to manufacture.

The object is solved by the subject-matter according to independent claim 1 and according to the remaining independent claims. Dependent claims relate to preferred embodiments.

According to an aspect of the present disclosure, a spring brake actuator for a pneumatic braking system of a vehicle, in particular utility vehicle, is provided, wherein the spring brake actuator comprises: a housing having a circumferential portion and a housing base with an opening; a brake release bolt, wherein the brake release bolt projects through the opening; and a boss element for cooperating with the brake release bolt; wherein the brake release bolt and the boss element are bonded to each other by a substance-to-substance bond at at least one bonding section.

According to the disclosure, a connection between the interface boss element, e.g., a nut, and the brake release bolt is achieved by a substance-to-substance bond. The pin and/or ball may be dispensed with. For example, a thread of the brake release bold and an inner thread of a nut as the boss element may be in mechanical cooperation with each other. This mechanical cooperation as such may potentially enable an axial and/or rotational movement of the boss element. To prevent such movement, it is suggested that the brake release bold and the boss element are bonded together by the substance-to-substance bond. The substance-to-substance bond is arranged at the at least one bonding section. Therein, to bond the boss element and the brake release bolt together, the at least one bonding section may comprise a section of the boss element and a section of the brake release bolt. The at least one bonding section may thus be arranged at an interface between the boss element and the brake release bolt.

The substance-to-substance bond may achieve that a mechanical processing of the boss element and/or the brake release bolt, such as drilling a hole into the boss element and/or the brake release bolt, may be dispensed with. Further, an insertion of a ball and/or pin may be dispensed with. The at least one bonding section may be dimensioned and/or arranged to achieve a specific strength of the bond, since the strength of the bond may relate to the total size of the at least one bonding section. The substance-to-substance bond may be implemented to different kinds of release mechanism which, for example, may comprise a threaded piece, such as the brake release bolt, and a nut as the boss element, such as the interface nut.

Optionally, the brake release bolt and the boss element are bonded to each other by welding at at least one welding section. Therein, the at least one bonding section is formed by and/or comprises the at least one welding section. Welding, in particular laser welding, may offer cleanliness of the welding section, a comparatively small heat exposure, repeatability of the process, cleanliness at the welding station, precise positioning and an efficient strength control by defining the size and number of welding spots or of one or more a welding line lengths. Alternatively or additionally, the brake release bolt and the boss element are bonded to each other by glueing. Therein, an adhesive may be used to establish the substance-to-substance bond. Glueing may be even more cost-effective due to its efficient implementation and/or the comparatively simple application of the adhesive.

Optionally, the at least one bonding section is a bonding spot; and/or the brake release bolt defines an axial direction, and the at least one bonding section comprises a plurality of circumferentially distributed bonding spots. In other words, the at least one bonding section may comprise one or more bonding spots. The number of bonding spots may define the strength of the substance-to-substance bond. The bonding spots may be arranged and/or distributed along an interface between the brake release bolt and the boss element.

Optionally, the brake release bolt defines an axial direction, and the at least one bonding section comprises at least one circumferentially arranged bonding line. In other words, the bonding section comprises the bonding line. The bonding line may enable a larger strength of the substance-to-substance bond. The at least one bonding line may be arranged and/or distributed along an interface between the brake release bolt and the boss element.

Optionally, each of the boss element and the brake release bolt comprises a surface section that is parallel to the housing base; and the at least one bonding section is arranged at and/or between the surface sections of the boss element and the brake release bolt. In other words, the substance-to-substance bond is arranged at a front surface of the spring brake actuator. Therein, the brake release bolt and the boss element may be axially aligned so that the surface sections of the boss element and of the brake release bolt are also aligned to each other. This may achieve a more effective implementation of the substance-to-substance bond. For the same reason, additionally or alternatively, each of the boss element and the brake release bolt comprises a bottom surface section that is parallel to the housing base and abuts a member of the housing base; and the at least one bonding section is arranged at the bottom surface sections of the boss element and the brake release bolt.

Optionally, the brake release bolt comprises a thread and the boss element is a nut having an internal thread for cooperating with the thread of the brake release bolt; and the brake release bolt and the nut are fixated to each other by a cooperation of the thread and the internal thread. I.e., the cooperation of the boss element and the brake release bolt is a cooperation between the thread of the brake release bolt and the inner thread of the nut, i.e., of the boss element.

According to an aspect of the disclosure, a pneumatic braking system of a vehicle, in particular utility vehicle, is provided, wherein the pneumatic braking system comprises the spring brake actuator as described above. Optionally, the spring brake actuator comprises one or more features as described above as optional and/or preferred to achieve a technical effect corresponding thereto.

According to an aspect of the disclosure, a vehicle, in particular utility vehicle, is provided. The vehicle, in particular utility vehicle, comprises the pneumatic braking system as described above and/or the spring brake actuator as described above. Optionally, the pneumatic braking system and/or the spring brake actuator comprises one or more features as described above as optional and/or preferred to achieve a technical effect corresponding thereto.

According to an aspect of the disclosure, a method for manufacturing the spring brake actuator as described above is provided, wherein the method comprises: providing a housing having a circumferential portion and a housing base with an opening, a brake release bolt, wherein the brake release bolt projects through the opening, and a boss element for cooperating with brake release bolt; and bonding the brake release bolt and the boss element to each other by a substance-to-substance bond at at least one bonding section. Therein, the method may be performed so that one of the optional and/or preferred features as described with reference to the spring brake actuator is realized to achieve a technical effect corresponding thereto.

Optionally, bonding comprises welding. Welding may provide a realization of the substance-to-substance bond. Alternatively or additionally, the substance-to-substance bond may be realized by glueing.

Optionally, welding is laser beam welding. Therein, laser beam welding is realized to be particularly efficient and precise to realize the substance-to-substance bond.

Further advantages and technical features and their technical effects are disclosed in the figures and the description thereof.

The figures show preferred embodiments as follows:
- Fig. 1: a schematic of a vehicle, in particular utility vehicle, according to an embodiment of the disclosure;
- Fig. 2: a perspective view of a spring brake actuator according to an embodiment of the disclosure;
- Fig. 3: a detail of a sectional view of a spring brake actuator according to an embodiment of the disclosure;
- Fig. 4: a detail of a sectional view of a spring brake actuator according to an embodiment of the disclosure;
- Fig. 5: a detail of a sectional view of a spring brake actuator according to an embodiment of the disclosure; and
- Fig. 6: a schematic of a method according to an embodiment of the disclosure.

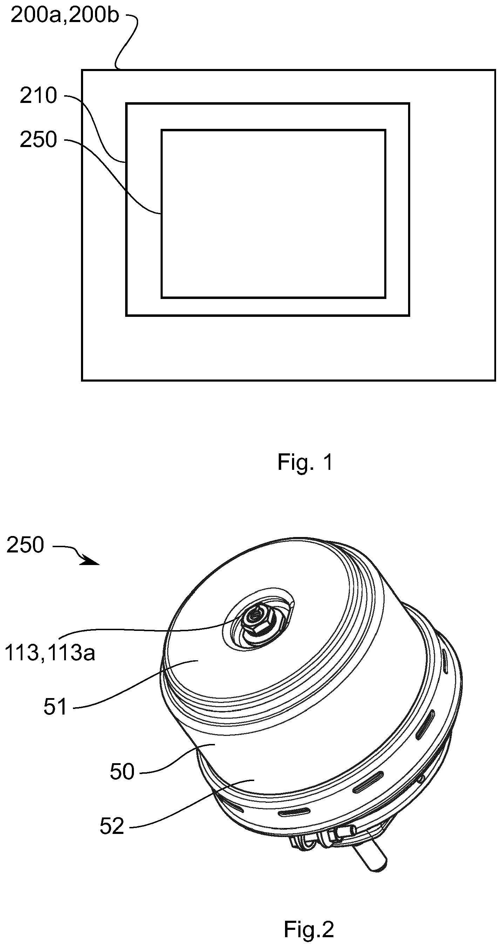

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination.

The vehicle 200a, 200b comprises a pneumatic braking system 210. The pneumatic braking system 210 is adapted to be actuated by a driver of the vehicle 200a, 200b and/or by an autonomous driving function of the vehicle 200a, 200b to apply and/or release a braking torque.

The pneumatic braking system comprises a spring brake actuator 250. The spring brake actuator 250 is adapted to apply and release in particular a parking brake and/or an emergency brake, in particular in the event of a loss of air pressure and/or when actuated by the driver and/or by an autonomous driving function.

Such a spring brake actuator 250 is further described with reference to Figures 2 to 5.

Figure 2 shows a perspective view of a spring brake actuator 250 according to an embodiment of the disclosure. The spring brake actuator 250 of Figure 2 is a spring brake actuator 250 for a pneumatic braking system 210 of a vehicle 200a, 200b. Such a vehicle 200a, 200b and braking system 210 is described with reference to Figure 1. Figure 2 is described under reference to Figure 1.

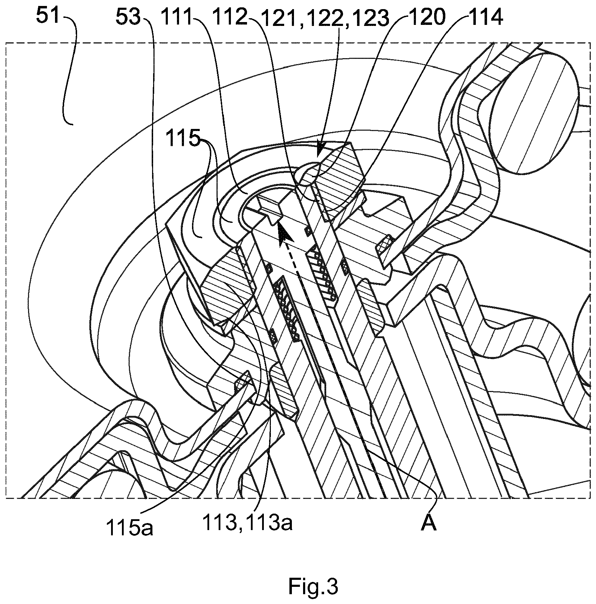

The spring brake actuator 250 of Figure 2 comprises a housing 50. The housing 50 comprises a circumferential portion 52 and a housing base 51 with an opening 53 (see Figures 3). Thus, the housing 50 is essentially cylindrical. The housing 50 is made of sheet metal.

The spring brake actuator 250 comprises a boss element 113a. The boss element 113a is a nut 113. In another embodiment (not shown), the boss element 113a may be threadless. The nut 113 is adapted to cooperate with a brake release bolt 111 (see Figures 3 to 5) of the spring brake actuator 250. Therein, a movement of the brake release bolt 111 reciprocates the nut 113. In another embodiment (not shown), the boss element 113a may cooperate with another shaft different from the brake release bolt 111 and/or at another section of the brake release bolt 111.

The spring brake actuator 250 is described with reference to Figures 3 to 5 in further detail.

Figure 3 shows a detail of a sectional view of a spring brake actuator 250 according to an embodiment of the disclosure. The spring brake actuator 250 of Figure 3 is the spring brake actuator 250 as shown in Figure 2. Figure 3 is described under reference to Figures 1 and 2.

The spring brake actuator 250 comprises the brake release bolt 111. The brake release bolt 111 is adapted to move along an axial direction A. The brake release bolt 111 is elongated in the axial direction A.

The brake release bolt 111 projects through the opening 53. I.e., a portion of the brake release bolt 111 may, depending on the deflection of the brake release bolt 111, protrude from the opening 53.

The brake release bolt 111 comprises a thread 112. The thread 112 is arranged circumferentially around the brake release bolt 111. The thread 112 is arranged at the portion of the brake release bolt 111 which protrudes from the opening 53. In another embodiment (not shown), the thread 112 may be dispensed with, e.g., if a boss element 113a is threadless.

The spring brake actuator 250 comprises a nut 113 as a boss element 113a, i.e., a fastener with a threaded hole. The nut 113 comprises an internal thread 114 for cooperating with the thread 112 of the brake release bolt 111. I.e., the internal thread 114 is arranged at an inner circumferential section of the nut 113.

The brake release bolt 111 and the nut 113 are fixated to each other by a cooperation of the thread 112 and the internal thread 114. I.e., the nut 113 is screwed and/or wound on the brake release bolt 111 so that the thread 112 and the internal thread 114 enable keeping the brake release bolt 111 and the nut 113 together.

The brake release bolt 111 and the nut 113 are bonded to each other by a substance-to-substance bond 120 at at least one bonding section 121. In Figure 3, brake release bolt 111 and the nut 113 are bonded to each other by a substance-to-substance bond 120 at one bonding section 121. The brake release bolt 111 and the nut 113 are bonded to each other by welding at at least one welding section 122. In Figure 3, The brake release bolt 111 and the nut 113 are bonded to each other by welding at one welding section 122. I.e., the bonding section 121 is the welding section 122. The bonding section 121 is a bonding spot 123.

Each of the nut 113 and the brake release bolt 111 comprises a surface section 115 that is parallel to the housing base 51. The nut 113 and the brake release bolt 111 comprises axially aligned surfaces. The bonding section 121 is arranged at and/or between the surface sections 115 of the nut 113 and the brake release bolt 111.

In other words, a connection between the nut 113 and the brake release bolt 111 is provided by a laser welding connection of the front surface section 115. In another embodiment (not shown), additionally or alternatively, the connection between the nut 113 and the brake release bolt 111 may provided by a laser welding connection of a bottom surface section 115a of the nut 113, wherein the bottom surface section is, in relation to the nut 113, opposite to the front surface section 115 and/or abuts against a member of the housing base 51. After placing the nut 113 on the thread 112 of the brake release bolt 111 in a final position, a laser if used to connect the nut 113 and the brake release bolt 111 together by partially melting the nut 113 and/or the brake release bolt 111 at the bonding section 121, i.e., the welding section 122, to achieve the substance-to-substance bond 120.

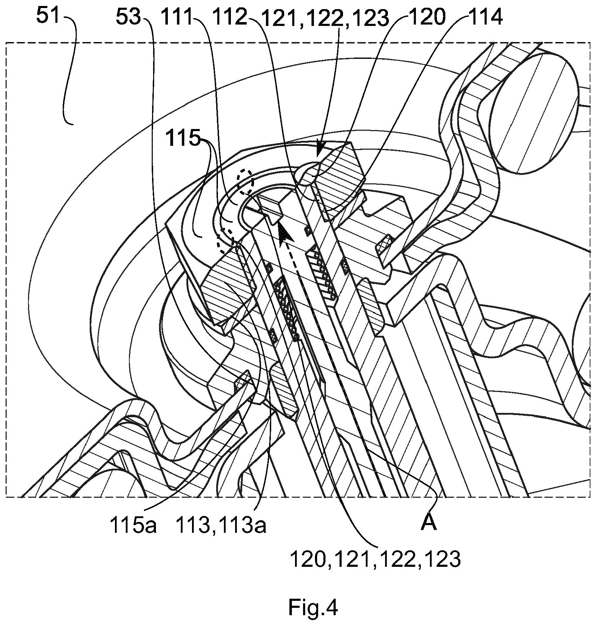

Figure 4 shows a detail of a sectional view of a spring brake actuator 250 according to an embodiment of the disclosure. The spring brake actuator 250 of Figure 4 is an alternative to the spring brake actuator 250 as shown in Figure 3. Figure 4 is described under reference to Figures 1 to 3, wherein the differences are described.

The brake release bolt 111 defines the axial direction A.

The at least one bonding section 121 comprises a plurality of circumferentially distributed bonding spots 123. Therein, two of the bonding spots 123 are illustrated schematically. The bonding spots 123 may be evenly distributed around an interface and/or a contact line between the brake release bolt 111 and the nut 113. In Figure 4, the bonding spots 123 are separated by about 90°. In another embodiment, any other number and/or distribution of bonding spots 123 may be applied (not shown), depending on the welding procedure and/or mechanical requirements.

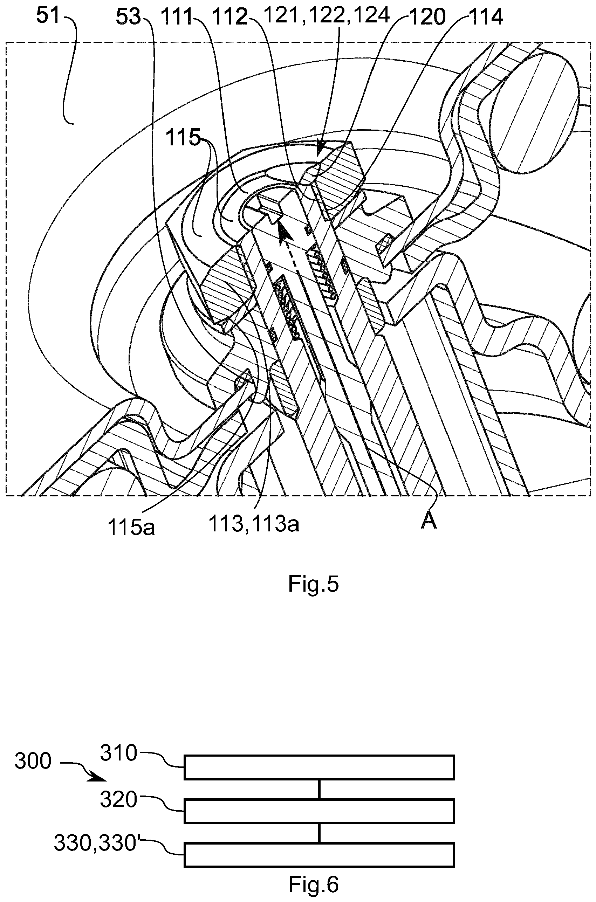

Figure 5 shows a detail of a sectional view of a spring brake actuator 250 according to an embodiment of the disclosure. The spring brake actuator 250 of Figure 5 is an alternative to the spring brake actuator 250 as shown in Figures 3 and 4. Figure 5 is described under reference to Figures 1 to 4, wherein the differences are described.

The brake release bolt 111 defines the axial direction A.

The at least one bonding section 121 comprises at least one circumferentially arranged bonding line 124. The bonding line 124 bonds the brake release bolt 111 and the nut 113 together at an elongated segment of the interface and/or contact line between the brake release bolt 111 and the nut 113. The length of the bonding line 124 may depend on the welding procedure and/or mechanical requirements. In another embodiment, any other number and/or distribution of bonding lines 124 may be applied (not shown), depending on the welding procedure and/or mechanical requirements.

In another embodiment (not shown), the at least one bonding section 121 comprises at least one circumferentially arranged bonding line 124 and at least one bonding spot 123. I.e., bonding the brake release bolt 111 and the nut 113 via one or more bonding lines 124 and one or more bonding spots 123 may be combined.

Figure 6 shows a schematic of a method 300 according to an embodiment of the disclosure. The method 300 of Figure 4 is a method 300 for manufacturing the spring brake actuator 250 as described with reference to Figures 1 to 5. Figure 6 is described under reference to Figures 1 to 5.

The method 300 comprises: providing 310 a housing 50 having a circumferential portion 52 and a housing base 51 with an opening 53, a brake release bolt 111 optionally with a thread 112, wherein the brake release bolt 111 projects through the opening 53, and a boss element 113a for cooperating with the brake release bolt 111, optionally providing 310 a nut 113 as a boss element 113a having an internal thread 114 for cooperating with the thread 112 of the brake release bolt 111.

Optionally, the method 300 comprises: fixating 320 the brake release bolt 111 and the nut 113 to each other by a cooperation of the thread 112 and the internal thread 114.

The method 300 comprises: bonding 330 the brake release bolt 111 and the boss element 113a and/or nut 113 to each other by a substance-to-substance bond 120 at at least one bonding section 121. Therein, bonding 330 comprises welding 330'. In one embodiment, welding 330' is laser beam welding.

### List of reference signs (Part of the description)

- A: axial direction

- 50: housing
- 51: housing base
- 52: circumferential portion
- 53: opening

- 111: brake release bolt
- 112: thread
- 113: nut
- 113a: boss element
- 114: internal thread
- 115: surface section
- 115a: bottom surface section
- 120: substance-to-substance bond
- 121: bonding section
- 122: welding section
- 123: bonding spot
- 124: bonding line

- 200a: vehicle
- 200b: utility vehicle
- 210: pneumatic braking system
- 250: spring brake actuator

- 300: method
- 310: providing
- 320: fixating
- 330: bonding
- 330': welding

## Claims

1. Spring brake actuator (250) for a pneumatic braking system (210) of a vehicle (200a), in particular utility vehicle (200b), wherein the spring brake actuator (250) comprises:
- a housing (50) having a circumferential portion (52) and a housing base (51) with an opening (53);
- a brake release bolt (111), wherein the brake release bolt (111) projects through the opening (53); and
- a boss element (113a) for cooperating with the brake release bolt (111); wherein
- the brake release bolt (111) and the boss element (113a) are bonded to each other by a substance-to-substance bond (120) at at least one bonding section (121).

2. Spring brake actuator (250) as claimed in claim 1, wherein the brake release bolt (111) and the boss element (113a) are bonded to each other by welding at least one welding section (122).

3. Spring brake actuator (250) as claimed in claim 1 or 2, wherein
- the at least one bonding section (121) is a bonding spot (123); and/or
- the brake release bolt (111) defines an axial direction (A), and the at least one bonding section (121) comprises a plurality of circumferentially distributed bonding spots (123).

4. Spring brake actuator (250) as claimed in any one of the preceding claims, wherein
- the brake release bolt (111) defines an axial direction (A); and
- the at least one bonding section (121) comprises at least one circumferentially arranged bonding line (124).

5. Spring brake actuator (250) as claimed in any one of the preceding claims, wherein
- each of the boss element (113a) and the brake release bolt (111) comprises a surface section (115) that is parallel to the housing base (51); and
- the at least one bonding section (121) is arranged at and/or between the surface sections (115) of the boss element (113a) and the brake release bolt (111).

6. Spring brake actuator (250) as claimed in any one of the preceding claims, wherein
- the brake release bolt (111) comprises a thread (112) and the boss element (113a) is a nut (113) having an internal thread (114) for cooperating with the thread (112) of the brake release bolt (111); and
- the brake release bolt (111) and the nut (113) are fixated to each other by a cooperation of the thread (112) and the internal thread (114).

7. Pneumatic braking system (210) of a vehicle (200a), in particular utility vehicle (200b), wherein the pneumatic braking system (210) comprises the spring brake actuator (250) as claimed in any of the preceding claims.

8. Vehicle (200a), in particular utility vehicle (200b), wherein the vehicle (200a), in particular utility vehicle (200b), comprises the pneumatic braking system (210) as claimed in claim 6 and/or the spring brake actuator (250) as claimed in any of the claims 1 to 5.

9. Method (300) for manufacturing the spring brake actuator (250) as claimed in any of the claims 1 to 5, wherein the method (300) comprises:
- providing (310) a housing (50) having a circumferential portion (52) and a housing base (51) with an opening (53), a brake release bolt (111), wherein the brake release bolt (111) projects through the opening (53), and a boss element (113a) for cooperating with brake release bolt (111); and
- bonding (330) the brake release bolt (111) and the boss element (113a) to each other by a substance-to-substance bond (120) at at least one bonding section (121).

10. Method (300) as claimed in claim 9, wherein bonding (330) comprises welding (330').

11. Method (300) as claimed in claim 10, wherein welding (330') is laser beam welding.
